# EUROPÄISCHE PATENTSCHRIFT

(11) **EP 3 429 799 B1**
(45) Veröffentlichungstag und Bekanntmachung des Hinweises auf die Patenterteilung: **22.04.2020**
(21) Anmeldenummer: 17708478.7
(22) Anmeldetag: 01.03.2017
(51) Int. Cl.: B23P 19/04, B21K 25/00, B29C 65/00, B29C 65/56, B29C 65/78, B29C 65/80, B29C 65/64, B44B 5/00, B44B 5/02

(54) **EINSETZVORRICHTUNG UND VERFAHREN ZUM EINSETZEN EINES RONDENRINGS IN EINEN AUSSENRING EINER RONDE**
INSERTING DEVICE AND METHOD FOR INSERTING A CIRCULAR BLANK RING INTO AN OUTER RING OF A CIRCULAR BLANK
DISPOSITIF ET PROCÉDÉ D'INSERTION D'UNE ÉBAUCHE ANNULAIRE DANS UNE BAGUE EXTÉRIEURE D'UNE RONDE

(30) Priorität: 15.03.2016 DE 102016204209
(43) Veröffentlichungstag der Anmeldung: 23.01.2019
(73) Patentinhaber: Schuler Pressen GmbH, 73033 Göppingen (DE)
(72) Erfinder: PRINZINGER, Helmut, 89558 Böhmenkirch (DE); KNEER, Simon, 73054 Eislingen (DE)
(74) Vertreter: Rüger Abel Patentanwälte PartGmbB
(86) Internationale Anmeldenummer: PCT/EP2017/054815
(87) Internationale Veröffentlichungsnummer: WO 2017/157667

(56) Entgegenhaltungen:
- EP-A2- 2 511 022
- WO-A1-2014/202562
- DE-A1- 10 057 000
- ES-A1- 2 294 882
- KR-B1- 0 144 703

## Beschreibung

Die Erfindung betrifft eine Einsetzvorrichtung sowie ein Verfahren zum Einsetzen eines Rondenrings in einen Außenring einer Ronde.

Aus DE 10 2010 013 148 A1 ist eine Ronde mit mehreren Rondenteilen bekannt. Die Ronde besteht aus einem Rondenkern, einem Außenring sowie einem Rondenring, der zwischen dem Rondenkern und dem Außenring angeordnet ist. Der Rondenkern und der Außenring bestehen aus einem metallischen Material. Der Rondenring besteht im Wesentlichen aus Kunststoff, beispielsweise aus einem Polymer. Auch in ES 2 294 882 A1 ist eine mehrteilige Ronde mit einem Außenring, einem Rondenring und einem Rondenkern beschrieben.

Beim Zusammenfügen eines Rondenrings aus Kunststoff mit einem anderen Rondenteil aus Metall kann es zu Verformungen und Beschädigungen des Rondenrings kommen. Ein Außenring weist nach dem Stanzen des zentralen Loches einen Grat auf. Beim Zusammenfügen ist nicht bekannt, auf welcher Seite des Außenrings sich der Grat befindet. Insbesondere durch einen solchen Grat kann ein Rondenring aus weicherem Material, insbesondere Kunststoff, beim Zusammensetzen mit dem Außenring beschädigt werden.

Aus WO 2014/202562 A1 sind eine Vorrichtung und ein Verfahren zum Einsetzen eines unrunden Rondenkerns in einen Rondenring bekannt. Der Rondenkern wird dabei axial benachbart zum Loch des Rondenrings positioniert und mit Hilfe einer Eindrückeinrichtung unter Bereitstellung einer Eindrückkraft eingesetzt. Der Rondenkern und der Rondenring haben dabei eine unrunde Gestalt. Wenn die unrunden Konturen nicht exakt miteinander fluchten, wird durch das Erzeugen der Eindrückkraft eine Relativverdrehung zwischen dem Rondenkern und dem Rondenring bewirkt, bis die Konturen fluchten und ein Eindrücken möglich ist. Das Eindrücken kann dabei vertikal von oben oder vertikal von unten erfolgen.

DE 100 57 000 A1 offenbart eine Einsetzvorrichtung gemäß dem Oberbegriff des Patentanspruches 1 und EP 2 511 022 A2 offenbart ein Verfahren gemäß dem Oberbegriff des Patentanspruches 16.

Ausgehend vom bekannten Stand der Technik kann es als Aufgabe der Erfindung angesehen werden, das Einsetzen eines Rondenrings aus Kunststoff in einen Außenring einer Ronde zu verbessern und ein Beschädigen des Rondenrings zu vermeiden.

Diese Aufgabe wird durch eine Einsetzvorrichtung mit den Merkmalen des Patentanspruches 1 sowie ein Verfahren mit den Merkmalen des Patentanspruches 16 gelöst.

Die Einsetzvorrichtung sowie das Verfahren sind dazu eingerichtet, einen Rondenring in einen Außenring einzusetzen. Der Rondenring und der Außenring sind beispielsweise Bestandteil einer mehrteiligen Ronde, die insbesondere aus einem Rondenkern, dem Rondenring und dem Außenring bestehen kann. Der Außenring besteht aus Metall oder einer metallischen Legierung. Der Rondenkern besteht ebenfalls aus Metall oder einer metallischen Legierung und kann aus demselben oder einen vom Außenring verschiedenen Material bestehen. Der Rondenring besteht aus einem Material, das weicher ist als das Material des Außenrings. Der Rondenring besteht vorzugsweise aus Kunststoff oder zumindest überwiegend aus Kunststoff.

Die Einsetzvorrichtung hat einen koaxial zu einer Achse angeordneten Stößel. An seiner Stirnseite hat der Stößel eine Stößelfläche zur Beaufschlagung bzw. Bewegung des Rondenrings relativ zum Außenring. Ein Stößelantrieb ist vorhanden, um den Stößel entlang der Achse zu bewegen. Die Achse erstreckt sich vorzugsweise in einer Vertikalrichtung oder unter einem spitzen Winkel gegenüber der Vertikalen.

Zu der Einsetzvorrichtung gehört außerdem ein Zentrierkörper, der koaxial zur Achse angeordnet ist. Der Zentrierkörper hat ein freies Ende, das der Stößelfläche bzw. einer Einsetzstelle zugeordnet ist. An dem freien Ende kann der Zentrierkörper eine Fase bzw. einen sich verjüngenden und beispielsweise konischen Abschnitt aufweisen.

Mittels eines Zentrierantriebs kann der Zentrierkörper entlang der Achse zur Einsetzstelle bewegt werden. An der Einsetzstelle kann der Zentrierkörper in Eingriff mit einem dort vorhandenen Außenring gebracht werden. Zur Bewegung des Zentrierkörpers entlang der Achse dient ein Zentrierantrieb. Durch den Eingriff des Zentrierkörpers mit dem Außenring erfolgt ein koaxiales Ausrichten des Außenrings gegenüber der Achse. Die Bewegung des Zentrierkörpers zur Einsetzstelle erfolgt vorzugsweise vertikal nach unten.

Eine Steuereinheit ist dazu eingerichtet, den Zentrierantrieb für den Zentrierkörper sowie den Stößelantrieb für den Stößel anzusteuern. Durch die Ansteuerung des Zentrierantriebs wird ein koaxiales Ausrichten des Außenrings zur Achse bewirkt. Durch Ansteuern des Stößelantriebs beaufschlagt der Stößel mit seiner Stößelfläche den Rondenring und bewegt den Rondenring entlang der Achse zur Einsetzstelle. An der Einsetzstelle wird der Rondenring in den Außenring eingesetzt.

Vor dem Einsetzen des Rondenrings wird der Außenring koaxial zur Achse ausgerichtet. Dadurch ist seine Position eindeutig vorgegeben. Der Rondenring kann daher koaxial zur Achse A bewegt und mit minimalem Reibkontakt zum Außenring in diesen eingesetzt werden. Der Außenring hat nach dem Stanzen des Loches auf einer Seite einen Grat. Dieser Grat kann auf der Seite vorhanden sein, von der der Rondenring eingesetzt wird und bei einer radialen Überlappung zwischen dem Rondenring und dem Außenring zu einer Beschädigung des weicheren Rondenrings führen kann. Durch das Vermeiden, ein er solchen radialen Überlappung beim Einsetzen, kann eine Beschädigung des Rondenrings beim Einsetzen vermieden werden.

Die Bewegung des Rondenrings zur Einsetzstelle bzw. zum Außenring hin ist vorzugsweise vertikal nach oben ausgerichtet.

Die Steuereinheit ist vorzugsweise dazu eingerichtet, den Zentrierantrieb und den Stößelantrieb derart zeitlich koordiniert anzusteuern, dass der Zentrierkörper in den Außenring eingreift, bevor der Stößel den Rondenring mit dem Außenring in Kontakt bringt. Der Zentrierkörper greift somit in den Außenring ein, solange der Rondenring und der Außenring noch keinen Kontakt haben und in Axialrichtung, parallel zur Achse, einen Abstand aufweisen. Dadurch ist sichergestellt, dass die Ausrichtung des Außenrings koaxial zur Achse abgeschlossen ist, bevor eine Berührung zwischen dem Rondenring und dem Außenring stattfindet.

Es ist außerdem vorteilhaft, wenn die Steuereinheit dazu eingerichtet ist, den Zentrierantrieb und den Stößelantrieb zeitlich derart koordiniert anzusteuern, dass der Zentrierkörper nach dem Kontakt zwischen dem Rondenring und dem Außenring noch am Außenring anliegt. Es ist möglich, dass der Zentrierkörper so lange am Außenring anliegt, bis das Einsetzen des Rondenrings beendet ist. Solange der Stößel den Rondenring in den Außenring einsetzt, ist der Zentrierkörper - zumindest während eines bestimmten Zeitabschnitts oder während des gesamten Einsetzvorgangs - in Kontakt mit dem Rondenring. Dadurch bleibt die koaxiale Ausrichtung zur Achse sicher erhalten. Vorzugsweise beaufschlagt der Zentrierkörper den Außenring solange, bis der durch den Stößel bewegte Rondenring den Zentrierkörper vom Außenring weg drückt, Z.B. in eine Ausgangs- oder Ruhelage des Zentrierkörpers.

Es ist auch möglich, dass die Steuereinheit dazu eingerichtet ist, den Zentrierantrieb und den Stößelantrieb zeitlich derart koordiniert anzusteuern, dass der Zentrierkörper vom Außenring entfernt ist, bevor der Stößel den Rondenring mit dem Außenring in Kontakt bringt. Es ist außerdem möglich, den Zentrierkörper vom Außenring wegzubewegen, sobald der Rondenring mit dem Außenring in Kontakt kommt, so dass nur zu Beginn des Einfügevorgangs noch ein Kontakt zwischen dem Zentrierkörper und dem Außenring besteht. Sobald der Rondenring teilweise in den Außenring eingreift, kann eine Bewegung des Außenrings radial zur Achse freigegeben werden.

Nach dem Kontakt zwischen dem Zentrierkörper und dem Außenring wird die Kraft, mit der der Zentrierkörper auf den Außenring drückt, vorzugsweise ausschließlich durch die Gewichtskraft des Zentrierkörpers bestimmt. Vorzugsweise wird der Zustand, in dem der Zentrierkörper nur durch seine Gewichtskraft auf dem Außenring aufliegt durch Ansteuern des Zentrierantriebs eingestellt, bevor das Einsetzen des Rondenrings abgeschlossen ist oder bevor der Rondenring in Kontakt mit dem Außenring gelangt.

Bei einem Ausführungsbeispiel hat der Zentrierantrieb einen pneumatischen Zylinder, der als doppelt wirkender Zylinder mit einer ersten Arbeitskammer und einer zweiten Arbeitskammer ausgeführt sein kann. Die beiden Arbeitskammern sind durch einen Kolben fluidisch voneinander getrennt. Der Kolben ist mit dem Zentrierkörper bewegungsgekoppelt und beispielsweise starr verbunden. Es ist bevorzugt, wenn immer zumindest eine der beiden Arbeitskammern fluidisch mit der umgebenden Atmosphäre verbunden ist. Zur Bewegung des Zentrierkörpers in Richtung zur Einsetzstelle hin wird beispielsweise die erste Arbeitskammer mit Druck beaufschlagt.

Anstelle eines pneumatischen Zylinders könnte auch ein anderer fluidischer Zylinder verwendet werden. Das Verwenden von Druckluft hat den Vorteil, dass die Druckluft in die umgebende Atmosphäre abgegeben werden kann. Es ist hier nicht notwendig, einen geschlossenen Kreislauf zu bilden.

Vorzugsweise kann die erste Arbeitskammer fluidisch mit der umgebenden Atmosphäre verbunden und mithin drucklos geschaltet werden, nachdem der Zentrierkörper die Einsetzstelle erreicht hat und in Kontakt mit dem Außenring steht. Insbesondere erfolgt das Druckentlasten der ersten Arbeitskammer bevor der Stößel den Rondenring mit dem Außenring und/oder dem Zentrierkörper in Kontakt bringt. Dieses frühe Druckentlasten der ersten Arbeitskammer hat den Vorteil, dass der Zentrierkörper anschließend durch Druckbeaufschlagung der zweiten Arbeitskammer sehr schnell in seine Ausgangslage zurückbewegt werden kann.

Bei einem solchen pneumatischen Zylinder kann die zweite Arbeitskammer zur Bewegung des Zentrierkörpers von der Einsetzstelle weg und/oder zum Halten des Zentrierkörpers in einer von der Einsetzstelle entfernten oberen Lage mit Druck beaufschlagt werden. Die erste Arbeitskammer ist dabei fluidisch mit der umgebenden Atmosphäre verbunden.

Zur Druckbeaufschlagung bzw. Druckentlastung der Arbeitskammern kann der Zentrierantrieb bei einem Ausführungsbeispiel zwei unabhängig voneinander ansteuerbare Ventile aufweisen. Dadurch ist die Druckbeaufschlagung bzw. Druckentlastung der beiden Arbeitskammern unabhängig voneinander steuerbar und es können auch beide Arbeitskammern gleichzeitig druckentlastet sein. Durch die unabhängig voneinander ansteuerbaren Ventile ist ein schnelles Umschalten möglich.

Bei einer bevorzugten Ausführungsform hat die Einsetzvorrichtung eine erste Transporteinrichtung, die dazu eingerichtet ist, die Rondenringe in eine Ausgangsposition benachbart von der Stößelfläche zu transportieren.

Außerdem kann es vorteilhaft sein, wenn eine zweite Transporteinrichtung vorhanden ist, mittels der die Außenringe zu der Einsetzstelle transportiert werden können.

Die erste Transporteinrichtung kann bevorzugt einen um eine erste Revolverachse antreibbaren ersten Revolverteller mit mehreren Aufnahmetaschen für jeweils einen Rondenring aufweisen. Zusätzlich oder alternativ kann die zweite Transporteinrichtung einen um eine zweite Revolverachse antreibbaren zweiten Revolverteller mit mehreren Aufnahmetaschen für jeweils einen Außenring aufweisen. Die beiden Revolverachsen sind vorzugsweise parallel zueinander und/oder parallel zu der Achse ausgerichtet. Entlang der Achse überlappen sich die beiden Revolverteller. Dadurch kann der Rondenring aus der Aufnahmetasche des ersten Revolvertellers entlang der Achse in den Außenring eingesetzt werden, der sich in einer Aufnahmetasche des zweiten Revolvertellers befindet.

Vorzugsweise führt der Außenring beim Einfügen bzw. Einsetzen des Rondenrings keine Axialbewegung aus bzw. die Axialbewegung ist auf ein vorhandenes Spiel begrenzt. Der Außenring bleibt beim Einfügen bzw. Einsetzen des Rondenrings beispielsweise in der Aufnahmetasche des zweiten Revolvertellers.

Der Stößelantrieb ist vorzugsweise als elektromotorischer Antrieb ausgeführt. Beispielsweise handelt es sich um einen Linearantrieb.

Es ist außerdem bevorzugt, wenn zwischen einem sich in einer Ausgangsposition vor dem Einsetzen befindenden Rondenring und der Einsetzstelle koaxial zur Achse ein Zentrierkanal vorhanden ist. Der Zentrierkanal kann beispielsweise durch eine Zentrierhülse begrenzt sein. Er erweitert sich vorzugsweise in Richtung von der Einsetzstelle weg und kann in einem sich erweiternden Abschnitt konisch ausgeführt sein. Mittels des Stößels wird der Rondenring durch den Zentrierkanal zur Einsetzstelle bewegt und dabei koaxial zur Achse ausgerichtet.

Ein Verfahren zum Einsetzen eines Rondenrings in einen Außenring einer Ronde wird wie folgt durchgeführt:

Zunächst wird ein Außenring an eine Einsetzstelle transportiert. Gleichzeitig Zum Transport des Außenrings zur Einsetzstelle wird ein Rondenring in eine Ausgangsposition gebracht. In der Ausgangsposition ist der Rondenring in Axialrichtung, parallel zur Achse, mit Abstand zum Außenring angeordnet und befindet sich in der Ausgangsposition beispielsweise zwischen dem Außenring und dem Stößel. Anschließend wird der Außenring koaxial zur Achse ausgerichtet, beispielsweise unter Verwendung des Zentrierkörpers. Anschließend wird der Rondenring in das Loch des Außenrings eingesetzt. Die Axialbewegung des Rondenrings und das Ausrichten des Außenrings koaxial zur Achse können zeitlich überlappend erfolgen. Bevorzugt ist es, wenn das Ausrichten des Außenrings koaxial zur Achse beendet ist, bevor der Rondenring den Außenring berührt. Es ist außerdem vorteilhaft, wenn der Rondenring während und durch seine Bewegung in Axialrichtung aus seiner Ausgangsposition zur Einsetzstelle koaxial zur Achse ausgerichtet wird. Dadurch kann ein vorheriges Ausrichten des Rondenrings koaxial zur Achse entfallen. Außerdem wird vermieden, dass durch die Axialbewegung des Rondenrings eine radiale Verschiebung zur Achse erfolgt.

Vorteilhafte Ausgestaltungen der Erfindung ergeben sich aus den abhängigen Patentansprüchen, der Beschreibung und den Zeichnungen. Nachfolgend werden bevorzugte Ausführungsbeispiele anhand der beigefügten Zeichnungen im Einzelnen erläutert. Es zeigen:
Figur 1 eine Transportvorrichtung zum Transportieren von Rondenteilen bzw. Ronden zu einer Prägestation,
Figur 2 eine perspektivische Teildarstellung eines Ausführungsbeispiels einer Einsetzvorrichtung, die über eine erste Transporteinrichtung mit einem Pufferspeicher verbunden ist,
Figur 3 die Anordnung aus Figur 2 in einer anderen perspektivischen Ansicht von unten,
Figur 4 einen Querschnitt durch die Einsetzvorrichtung aus den Figuren 2 und 3,
Figur 5 eine blockschaltbildähnliche Prinzipdarstellung des Ausführungsbeispiels der Einsetzvorrichtung gemäß der Figuren 2-4,
Figur 6 Rondenteile zur Herstellung einer mehrteiligen Ronde in schematischer Draufsicht,
Figur 7 eine aus den Rondenteilen gemäß Figur 6 geprägte Münze in Draufsicht und
Figur 8 die geprägte Münze aus Figur 7 in einem Querschnitt.

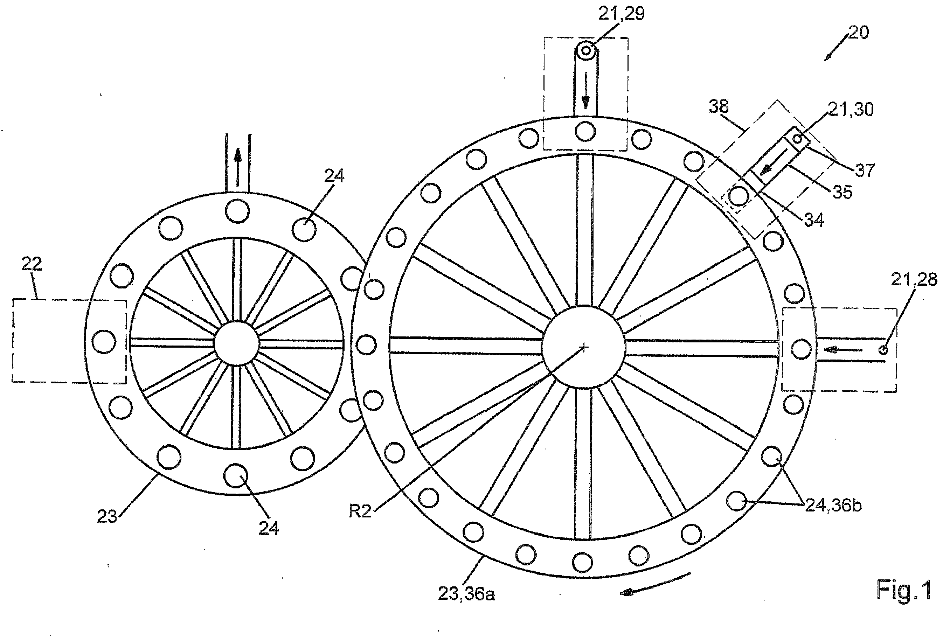

In Figur 1 ist stark schematisiert eine Transportvorrichtung 20 veranschaulicht, die zum Transportieren einer Ronde bzw. zum Transportieren von Rondenteilen 21 zu einer Prägestation 22 dient. Die Transportvorrichtung 20 kann einen oder mehrere Revolverteller 23 aufweisen, die in ihrem Umfangsbereich jeweils mehrere Taschen 24 haben. In einer Tasche 24 kann eine Ronde aus mehreren Rondenteilen 21 oder zumindest eines der Rondenteile 21 vorhanden sein und transportiert werden, wenn sich der betreffende Revolverteller um seine Revolverachse dreht.

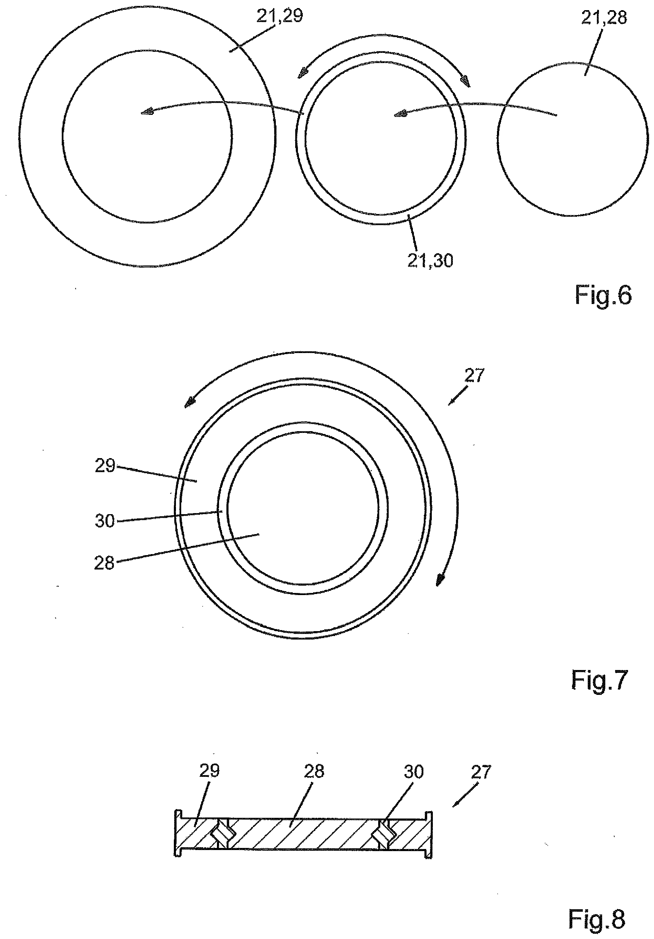

Beim Ausführungsbeispiel ist eine mehrteilige Ronde vorgesehen, aus der in der Prägestation 22 eine Münze 27 (Figuren 7 und 8) geprägt wird. Beim Ausführungsbeispiel besteht die Münze 27 bzw. die Ronde aus drei unterschiedlichen Rondenteilen 21: einem Rondenkern 28, einem Außenring 29 sowie einem Rondenring 30. Der Rondenring 30 ist zwischen dem Rondenkern 28 und dem Außenring 29 angeordnet. Der Rondenring 30 hat beispielsgemäß eine kreisförmige Innen- und Außenkontur. Dementsprechend hat auch der Rondenkern 28 eine kreisförmige Außenkontur und der Außenring 29 eine kreisförmige Innenkontur bzw. ein kreisförmiges Loch.

Der Rondenkern 28 und der Außenring 29 bestehen aus demselben oder aus unterschiedlichem metallischem Material bzw. einer metallischen Legierung.

Der Rondenring 30 besteht zumindest im Wesentlichen aus Kunststoff. Er hat eine geringe Masse, die zumindest deutlich geringer ist als die des Rondenkerns 28 und die des Außenrings 29. Er weist außerdem eine geringere Federsteifigkeit auf, als ein Rondenteil 21 aus einem Metall oder einer metallischen Legierung. Der Rondenring 30 kann sich beim Transport statisch aufladen. Diese Eigenschaften führen dazu, dass der Rondenring 30 aus Kunststoff bei der Herstellung der Münze 27 nicht ohne weiteres so bewegt und gehandhabt werden kann, wie ein metallisches Rondenteil 21.

In Figur 1 ist stark schematisiert an einer Stelle des Revolvertellers 23 eine Einsetzvorrichtung 34 veranschaulicht. Die Einsetzvorrichtung 34 dient dazu, Rondenringe 30 in jeweils einen zugeordneten Außenring 29 einzusetzen bzw. einzufügen. Die Verbindung zwischen dem Außenring 29 und dem Rondenring 30 ist nach dem Einsetzen in der Einsetzvorrichtung 34 hauptsächlich kraftschlüssig. Die letztendlich formschlüssige Verbindung zwischen dem Rondenring 30 und dem Außenring 29 bzw. dem Rondenkern 28 entsteht beim Prägen der Münze 27 in der Prägestation 22 (Figur 8).

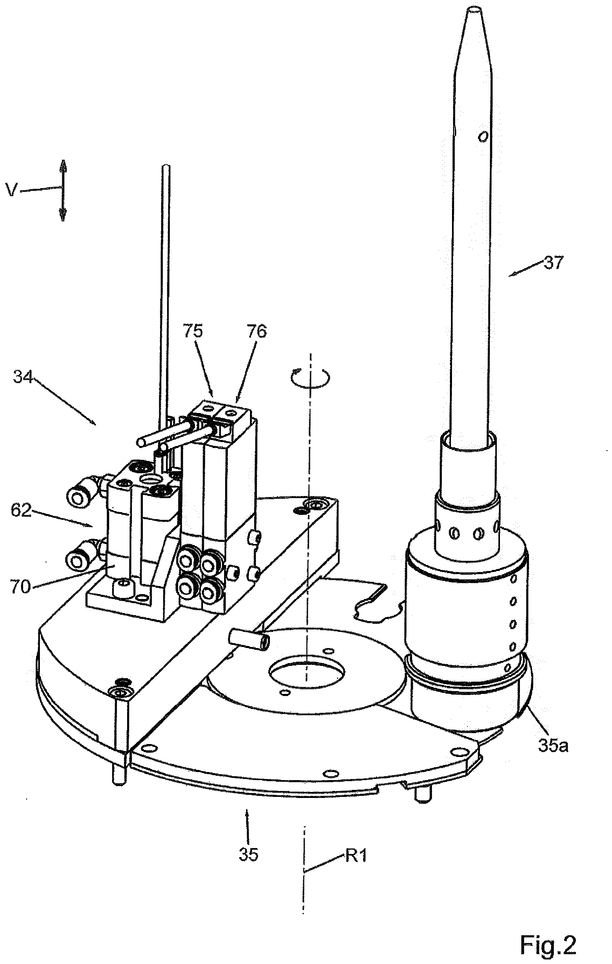

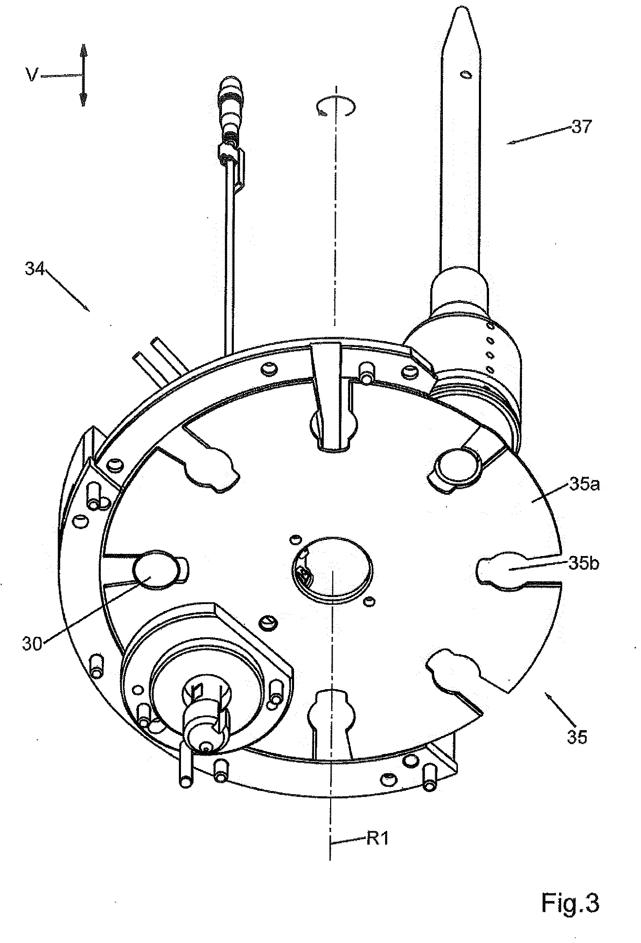

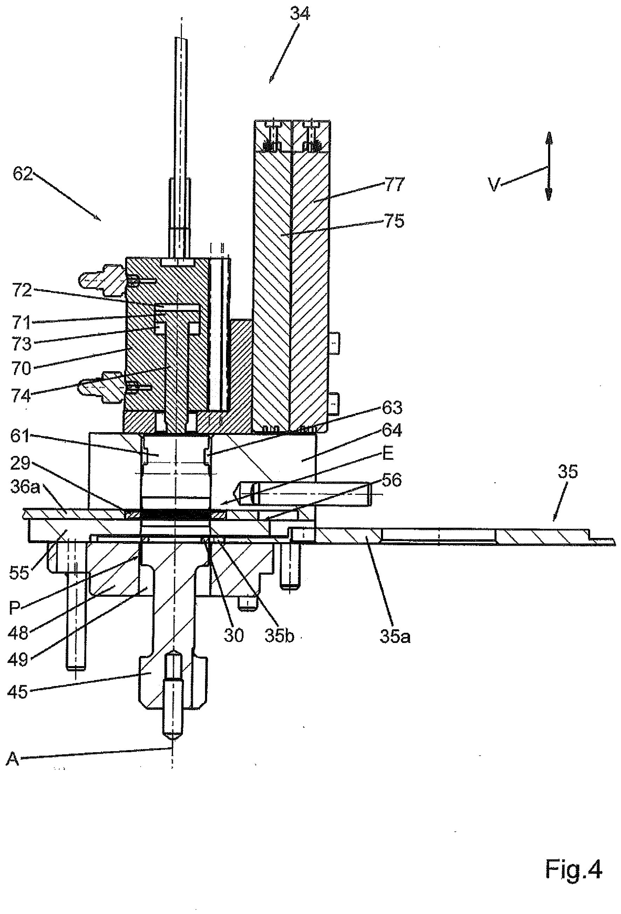

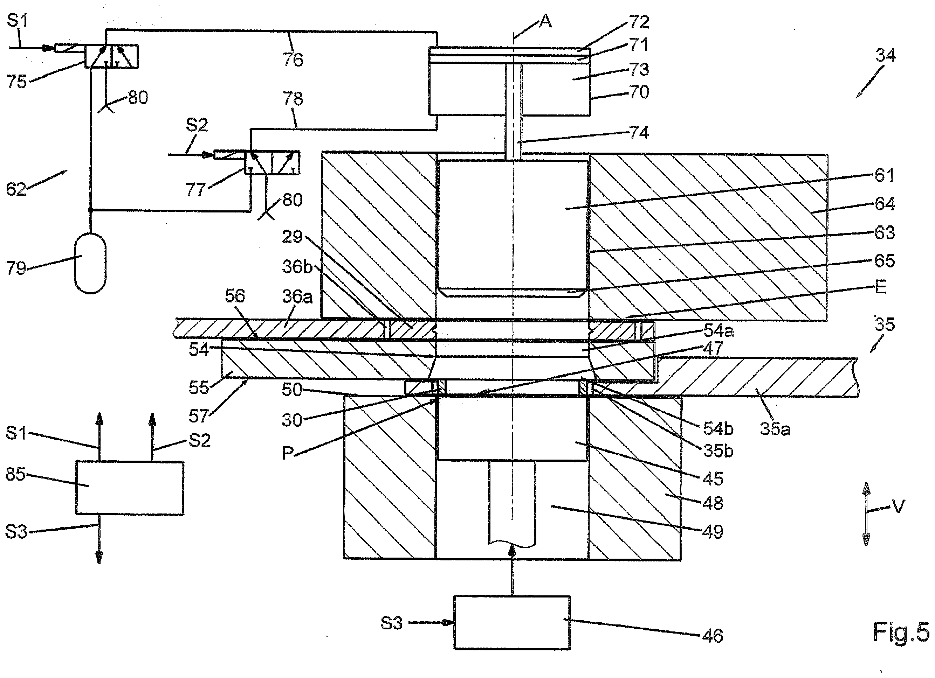

In den Figuren 2-5 ist ein Ausführungsbeispiel einer Einsetzvorrichtung 34 gezeigt. Die Figuren 2 und 3 sind perspektivische Darstellungen von oben (Figur 2) und von unten (Figur 3), während Figur 4 einen Querschnitt durch die Einsetzvorrichtung 34 gemäß der Figuren 2 und 3 zeigt. Figur 5 zeigt den Aufbau und die Funktionsweise der Einsetzvorrichtung 34 gemäß der Figuren 2-4 in einer Prinzipdarstellung.

Die Einsetzvorrichtung 34 ist beispielsgemäß einer ersten Transporteinrichtung 35 sowie einer zweiten Transporteinrichtung 36 zugeordnet. Die erste Transporteinrichtung 35 ist dazu eingerichtet, Rondenringe von einem Pufferspeicher 37 zur Einsetzvorrichtung 34 zu transportieren. Die erste Transporteinrichtung 35 weist hierfür einen um eine erste Revolverachse R1 antreibbaren ersten Revolverteller 35a auf. Der erste Revolverteller 35a hat entlang einer Kreislinie um die erste Revolverachse R1 regelmäßig verteilt angeordnete Aufnahmetaschen 35b zur Aufnahme jeweils eines Rondenrings 30. Der erste Revolverteller 35a kann durch eine Schrittschaltbewegung um jeweils einen vorgegebenen Drehwinkel bewegt werden. Bei jeder Schrittschaltbewegung wird die nächste Aufnahmetasche 35b mit einem Rondenring 30 aus dem Pufferspeicher 37 in eine Ausgangsposition P in der Einsetzvorrichtung 34 bewegt (Figuren 4 und 5). Nach dem Einfügen ist die Aufnahmetasche 35b des ersten Revolvertellers 35a leer und wird wieder zum Pufferspeicher 37 weitergetaktet, um dort wieder einen Rondenring 30 aufzunehmen. Die Größe des ersten Revolvertellers 35a und die Anzahl der Aufnahmetaschen 35b kann angepasst an die Anwendung und die Größe der Rondenringe 30 gewählt werden. Beim Ausführungsbeispiel liegen sich der Pufferspeicher 37 und die Einsetzvorrichtung 34 diametral zur ersten Revolverachse R1 gegenüber.

Der Pufferspeicher 37, die erste Transportvorrichtung 35 und die Einsetzvorrichtung 34 sind Bestandteil einer Einsetzstation 38 (Figur 1).

Wenigstens einer der vorhandenen Revolverteller 23 der Transportvorrichtung 20 bildet beispielsgemäß einen Revolverteller der zweiten Transporteinrichtung 36, der hier als zweiter Revolverteller 36a bezeichnet wird. Der zweite Revolverteller 36a ist um eine zweite Revolverachse R2 antreibbar und hat entlang eines Kreises um die zweite Revolverachse R2 gleichmäßig verteilt angeordnete Aufnahmetaschen 36b. Durch eine intermittierende Schrittschaltbewegung um die zweite Revolverachse R2 kann in jedem Schrittschalttakt ein Außenring 29 an eine Einsetzstelle E in der Einsetzvorrichtung 34 transportiert werden. In einer Axialrichtung V, die beim Ausführungsbeispiel mit der Vertikalrichtung übereinstimmt, sind der sich in der Ausgangsposition P befindende Rondenring 30 und der sich in der Einsetzstelle E befindende Außenring 29 benachbart und mit Abstand zueinander angeordnet. Die erste Revolverachse R1 und die zweite Revolverachse R2 sind beispielsgemäß ebenfalls in Axialrichtung V ausgerichtet. In Abwandlung zum bevorzugten Ausführungsbeispiel könnte die Axialrichtung V auch durch einen spitzen Winkel geneigt gegenüber der Vertikalen ausgerichtet sein.

Die Einsetzvorrichtung 34 weist einen koaxial zur einer Achse A angeordneten Stößel 45 auf. Der Stößel 45 ist durch einen Stößelantrieb 46 entlang der Achse A auf die Einsetzstelle E zu und von der Einsetzstelle E weg bewegbar. In seiner zurückgezogenen Position befindet sich der Stößel 45 in Axialrichtung V unterhalb des ersten Revolvertellers 35a bzw. unterhalb des sich in der Ausgangsposition P befindenden Rondenrings 30 (Figuren 4 und 5). Eine stirnseitige Stößelfläche 47 ist dabei dem in der Ausgangsposition P angeordneten Rondenring 30 bzw. der Einsetzstelle E zugewandt. Die Stößelfläche 47 ist stirnseitig am Stößel 45 angeordnet.

Der Stößelantrieb 46 ist beim bevorzugten Ausführungsbeispiel als elektromotorischer Linearantrieb ausgeführt. Es könnten auch rotative Elektromotoren mit einem zwischen dem Stößel 45 und dem Elektromotor angeordneten Getriebe, wie etwa einem Exzentergetriebe oder einem Kniehebelgetriebe, verwendet werden.

Der Stößel 45 ist entlang der Achse A geführt bewegbar. Zur Führung ist - z.B. in einem Stößelführungskörper 48 - ein Stößelführungskanal 49 vorhanden, der koaxial zur Achse A verläuft. Der Stößel 45 ist gleitend im Stößelführungskanal 49 geführt.

In der zurückgezogenen Position des Stößels 45 kann die Stößelfläche 47 in etwa bündig mit einer Oberseite 50 des Stößelführungskörpers 48 abschließen. Der Stößel 45 ragt zumindest nicht über die Oberseite 50 hinaus, so dass ein in einer Aufnahmetasche 35b des ersten Revolvertellers 35a bewegter Rondenring 30 ungehindert entlang der Oberseite 50 des Stößelführungskörpers 48 gleiten und in seiner Ausgangsposition P auf der Stößelfläche 47 positioniert werden kann.

Zwischen der Einsetzstelle E und dem sich in seiner zurückgezogenen Stellung befindenden Stößel 45 ist koaxial zur Achse A ein Zentrierkanal 54 vorhanden. Der Zentrierkanal 54 durchsetzt beispielsgemäß ein Zwischenelement 55, das eine plattenförmige Gestalt aufweisen kann. Das Zwischenelement 55 hat eine Oberseite 56, die als Auflage bzw. Gleitfläche für die Außenringe 29 dient, die mittels des zweiten Revolvertellers 36a zur Einsetzstelle E transportiert werden. Befindet sich ein Außenring 29 an der Einsetzstelle E, umschließt er den Zentrierkanal 54 ringförmig und liegt auf der Oberseite 56 des Zwischenelements 55 auf.

Der Zentrierkanal 54 hat im Anschluss an seine Mündung an der Oberseite 56 des Zwischenelements 55 einen zylindrischen Abschnitt 54a. Der Innendurchmesser des zylindrischen Abschnitts 54a entspricht dem Außendurchmesser des Rondenrings 30.

An den zylindrischen Abschnitt 54a schließt sich ein konischer Abschnitt 54b an. Der konische Anschnitt 54b erweitert sich ausgehend vom zylindrischen Abschnitt 54a zu einer der Oberseite 56 entgegengesetzten Unterseite 57 des Zwischenelements 55.

Koaxial zur Achse A ist außerdem ein Zentrierkörper 61 angeordnet. Der Zentrierkörper 61 ist mittels eines Zentrierantriebs 62 entlang der Achse A in Axialrichtung V bewegbar. Der Zentrierkörper 61 ist in einem Zentrierkanal 63 eines Führungselements 64 angeordnet und ist zur Einsatzstelle E hin offen. An einem der Einsetzstelle E zugewandten freien Ende weist der Zentrierkörper 61 einen konischen Endabschnitt oder eine Fase 65 auf, so dass er sich in dem an das freie Ende anschließenden Endabschnitt zur Einsetzstelle E hin verjüngt. Der Außendurchmesser eines zylindrischen Teils des Zentrierkörpers 61, der sich an die Fase 65 anschließt, ist größer als der Innendurchmesser des Außenrings 29. Das der Einsetzstelle E zugewandte freie Ende des Zentrierkörpers 61 bzw. der Fase 65 hat einen Außendurchmesser, der kleiner ist als der Innendurchmesser des Außenrings 29. Greift der Zentrierkörper 61 in den Außenring 29 ein, liegt er im Bereich der Fase 65 an einer Innenkante des Außenrings 29 an. Der Außenring 29 wird dadurch koaxial zum Zentrierkörper 61 und mithin koaxial zur Achse A ausgerichtet.

Ein Ausführungsbeispiel eines Zentrierantriebs 62 ist in den Figuren 4 und 5 schematisch veranschaulicht. Der Zentrierantrieb 62 weist hierbei eine Pneumatikzylinder 70 mit einem in Axialrichtung V bewegbaren Kolben 71 auf. Der Kolben 71 trennt eine erste Arbeitskammer 72 und eine zweite Arbeitskammer 73 des Pneumatikzylinders 70 fluidisch voneinander. Der Kolben 71 ist über eine Kolbenstange 74 mit dem Zentrierkörper 71 bewegungsgekoppelt und beispielsgemäß starr verbunden.

Zu dem Zentrierantrieb 62 gehört außerdem ein erstes Ventil 75, das ausgangsseitig über eine erste Verbindungsleitung 76 fluidisch mit der ersten Arbeitskammer 72 verbunden ist. Ein zweites Ventil 77 ist ausgangsseitig über eine zweite Verbindungsleitung 78 fluidisch mit der zweiten Arbeitskammer 73 verbunden. Die beiden Ventile 75, 76 sind eingangsseitig zum einen mit einer Druckquelle 79 und zum anderen mit einem Entlüftungsanschluss 80 verbunden. Über jedes Ventil 75, 77 kann entweder die Druckquelle 79 oder der Entlüftungsanschluss 80 mit der zugeordneten Arbeitskammer 72, 73 fluidisch verbunden werden.

Das erste Ventil 75 ist über ein erstes Steuersignal S1 ansteuerbar und beispielsgemäß zwischen zwei Schaltstellungen umschaltbar. Analog hierzu ist das zweite Ventil 77 über ein zweites Steuersignal S2 ansteuerbar und beispielsgemäß zwischen zwei Schaltstellungen umschaltbar.

Das erste Steuersignal S1 und das zweite Steuersignal S2 werden von einer Steuereinheit 85 erzeugt und an die Ventile 75, 77 übermittelt. Die Steuereinheit 85 erzeugt außerdem ein drittes Steuersignal S3 für den Stößelantrieb 46. Die Steuereinheit 85 ist somit dazu eingerichtet, den Stößelantrieb 46 sowie den Zentrierantrieb 62 zu steuern. Die Steuereinheit 85 kann auch weitere Steueraufgaben erfüllen, beispielsweise die erste Transporteinrichtung 35 und/oder die zweite Transporteinrichtung 36 zum Transportieren der Rondenringe 30 bzw. der Außenringe 29 steuern.

Die vorstehend beschriebene Einsetzvorrichtung 34 arbeitet wie folgt:
Über die erste Transporteinrichtung 35 wird ein Rondenring 30 zur Einsetzvorrichtung 34 transportiert und dort in seiner Ausgangsposition P auf der Stößelfläche 47 des Stößels 45 angeordnet. Gleichzeitig wird über die zweite Transporteinrichtung 36 ein Außenring 29 an die Einsetzstelle E in der Einsetzvorrichtung 34 transportiert. In dieser Situation sind weder der Außenring 29, noch der Rondenring 30 exakt koaxial zur Achse A angeordnet. Würden die beiden Teile 29, 30 ohne vorherige Ausrichtung in Axialrichtung V gegeneinander bewegt, könnte der Rondenring 30 aus Kunststoff beschädigt werden. Der Außenring 29 hat nach dem Ausstanzen des Loches auf einer seiner beiden Seiten einen Grat. Es ist nicht bekannt, ob der Grat auf der Seite vorhanden ist, von der der Rondenring 30 eingeführt wird, oder auf der entgegengesetzten Seite. Insbesondere durch diesen Grat kann ein Rondenring 30 aus Kunststoff beim Einsetzen beschädigt werden.

Erfindungsgemäß wird deswegen zunächst der Außenring 29 exakt koaxial zur Achse A ausgerichtet. Hierfür wird über den Zentrierantrieb 62 der Zentrierkörper 61 zur Einsetzstelle E bewegt und greift dort in das Loch des Außenrings 29 ein. Er liegt dann mit der Fase 65 bzw. dem konischen Abschnitt am Zentrierkörper 61 an. Dadurch wird der Außenring 29 koaxial zum Zentrierkörper 61 und mithin koaxial zur Achse A positioniert.

Über den Stößelantrieb 46 wird der Stößel 45 angetrieben und bewegt den Rondenring 30 durch den Zentrierkanal 54 zur Einsetzstelle E. Der Rondenring 30 gelangt dabei zunächst in den konischen Abschnitt 54b und wird bei seiner weiteren Bewegung allmählich koaxial zur Achse A ausgerichtet. Sobald der Rondenring 30 in dem zylindrischen Abschnitt 54a des Zentrierkanals 54 angekommen ist, hat er eine koaxiale Ausrichtung zur Achse A erreicht. Er wird über den Stößel 45 solange weiterbewegt, bis er an der Einsetzstelle E in den zuvor koaxial zur Achse A ausgerichteten Außenring 29 eingesetzt ist.

Die Steuereinheit 85 steuert den Stößelantrieb 46 und den Zentrierantrieb 62 koordiniert an. Der Außenring 29 wird über den Zentrierkörper 61 koaxial zur Achse A ausgerichtet, bevor der Stößel 45 den Rondenring 30 soweit bewegt hat, dass der Rondenring 30 und der Außenring 29 in Kontakt zueinander gelangen. Eine radiale Überlappung zwischen dem Rondenring 30 und dem Außenring 29 während des Einsetzens des Rondenrings 30 wird dadurch sicher vermieden.

Der Zentrierkörper 61 wird zur Einsetzstelle E bewegt, indem die erste Arbeitskammer 72 mit Druck beaufschlagt wird. Die erste Verbindungsleitung 76 wird hierfür über das erste Ventil 75 mit der Druckquelle 79 verbunden. Die zweite Arbeitskammer 73 wird dabei über das zweite Ventil 77 mit dem Entlüftungsanschluss 80 verbunden. Dadurch entsteht eine fluidische Verbindung zwischen der zweiten Arbeitskammer 73 und der umgebenden Atmosphäre. Die zweite Arbeitskammer 73 ist mithin zur Umgebung hin offen, so dass zur Bewegung des Kolbens 71 die Luft in die Umgebung verdrängt werden kann.

Sobald der Zentrierkörper 61 die Einsetzstelle E erreicht und in Eingriff mit dem Außenring 29 gelangt ist, wird beim Ausführungsbeispiel die erste Arbeitskammer 72 ebenfalls über das erste Ventil 75 mit dem Entlüftungsanschluss 80 und demnach mit der umgebenden Atmosphäre verbunden (entlüftet). Beide Arbeitskammern 72, 73 sind mithin lediglich mit dem Umgebungsluftdruck beaufschlagt. Der Zentrierkörper 61 liegt durch seine Gewichtskraft weiter am Außenring 29 an.

Die Bewegung des Zentrierkörpers 61 von der Einsetzstelle E weg erfolgt durch Druckbeaufschlagung der zweiten Arbeitskammer 73. Das zweite Ventil 77 wird in die entsprechende Schaltstellung umgeschaltet. Die Rückzugsbewegung des Zentrierkörpers 61 von der Einsetzstelle E weg kann entweder erfolgen, bevor der Rondenring 30 in Kontakt gelangt mit dem Außenring 29 oder während der Rondenring 30 das Loch des Außenrings 29 hineinbewegt wird oder nachdem der Rondenring 30 vollständig in den Außenring 29 eingesetzt wurde.

Das Entlüften der ersten Arbeitskammer 72 erfolgt beim Ausführungsbeispiel bereits dann, wenn der Zentrierkörper 61 die Einsetzstelle E erreicht hat und zwar unabhängig davon, ob die zweite Arbeitskammer 73 gleichzeitig mit Druck beaufschlagt oder erst später zur Einleitung der Rückzugsbewegung des Zentrierkörpers 61 von der Einsetzstelle E weg mit Druck beaufschlagt wird.

Der Stößel 45 wird positionsgesteuert bzw. positionsgeregelt. Sobald der Rondenring 30 vollständig in den Außenring 29 eingesetzt ist, wird der Stößel 45 über den Stößelantrieb 46 wieder in seiner zurückgezogenen Ausgangslage zurückbewegt (in Figur 5 gezeigt). In dieser zurückgezogenen Stellung kann ein neuer Rondenring 30 zur Einsetzvorrichtung 34 transportiert werden. Da der Stößel 45 die Aufnahmetasche 35b des ersten Revolvertellers 35a bei seiner Bewegung in Axialrichtung V durchgreift, ist ein Transport über den ersten Revolverteller 35a erst dann möglich, wenn der Stößel 45 wieder vollständig aus der Aufnahmetasche 35b entfernt ist.

Während des Einsetzens des Rondenrings 30 in den Außenring 29 wird der Außenring 29 in Axialrichtung V parallel zur Achse A nicht bewegt.

Die Erfindung betrifft eine Einsetzvorrichtung 34 und ein Verfahren zum Einsetzen eines Rondenrings 30 in einen Außenring 29. Hierzu wird zunächst ein Außenring 29 zu einer Einsetzstelle E in der Zuführvorrichtung 34 transportiert. Gleichzeitig wird ein Rondenring 30 in eine Ausgangsposition P in der Zuführvorrichtung gebracht. Über einen koaxial zu einer Achse A angeordneten Zentrierkörper 61 wird zunächst der Rondenring 29 koaxial zur Achse A ausgerichtet. Dabei bewegt er sich ausschließlich radial zur Achse A. Anschließend wird der Rondenring 30 mittels eines Stößels 45 in das Loch des Außenrings 29 eingesetzt. Während dieser Bewegung des Rondenrings 30 von seiner Ausgangsposition P in den Außenring 29 hinein, kann er durch ein Zentriermittel und vorzugsweise durch einen Zentrierkanal 54 koaxial zur Achse A ausgerichtet werden. Dabei kann auch der Zentrierkörper 61 durch den Rondenring 30 von der Einsetzstelle E weg bewegt werden - z.B. in eine Ausgangs- oder Ruhelage - und gelangt außer Eingriff mit dem Außenring 29. Der Rondenring 30 führt eine überlagerte Bewegung in Axialrichtung V und in Radialrichtung radial zur Achse A aus.

### Bezugszeichenliste:

- 20: Transportvorrichtung
- 21: Rondenteil
- 22: Prägestation
- 23: Revolverteller
- 24: Tasche

- 27: Münze
- 28: Rondenkern
- 29: Außenring
- 30: Rondenring

- 34: Einsetzvorrichtung
- 35: erste Transporteinrichtung
- 35a: erster Revolverteller
- 35b: Aufnahmetasche des ersten Revolvertellers
- 36: zweite Transporteinrichtung
- 37: Pufferspeicher
- 38: Einsetzstation

- 45: Stößel
- 46: Stößelantrieb
- 47: Stößelfläche
- 48: Stößelführungskörper
- 49: Stößelführungskanal
- 50: Oberseite des Stößelführungskörpers

- 54: Zentrierkanal
- 54a: zylindrischer Abschnitt des Zentrierkanals
- 54b: konischer Abschnitt des Zentrierkanals
- 55: Zwischenelement
- 56: Oberseite des Zwischenelements
- 57: Unterseite des Zwischenelements
- 61: Zentrierkörper
- 62: Zentrierantrieb
- 63: Zentrierkanal
- 64: Führungselement
- 65: Fase

- 70: Pneumatikzylinder
- 71: Kolben
- 72: erste Arbeitskammer
- 73: zweite Arbeitskammer
- 74: Kolbenstange
- 75: erstes Ventil
- 76: erste Verbindungsleitung
- 77: zweites Ventil
- 78: zweite Verbindungsleitung
- 79: Druckquelle
- 80: Entlüftungsanschluss

- 85: Steuereinheit

- A: Achse
- E: Einsetzstelle
- P: Ausgangsposition
- R1: erste Revolverachse
- R2: zweite Revolverachse
- V: Axialrichtung

## Patentansprüche

1. Einsetzvorrichtung (34) zum Einsetzen eines Rondenrings (30) in einen Außenring (29) einer Ronde,
mit einem koaxial zu einer Achse (A) angeordneten Stößel (45), der eine Stößelfläche (47) zur Beaufschlagung des Rondenrings (30) aufweist,
mit einem Stößelantrieb (46) zur Bewegung des Stößels (45) entlang der Achse (A),
mit einer Steuereinheit (85), die dazu eingerichtet ist, den Stößelantrieb (46) anzusteuern, um den Rondenring (30) durch Beaufschlagung mit der Stößelfläche (47) zur Einsetzstelle (E) zu bewegen,
**dadurch gekennzeichnet, dass** ein Zentrierkörper (61) vorhanden ist, der koaxial zur Achse (A) angeordnet ist und ein freies Ende aufweist, das der Stößelfläche (47) zugeordnet ist,
dass ein Zentrierantrieb (62) zur Bewegung des Zentrierkörpers (61) entlang der Achse (A) vorhanden ist,
dass die Steuereinheit (85), dazu eingerichtet ist, den Zentrierantrieb (62) anzusteuern, so dass der Zentrierkörper (61) in ein Loch eines an der Einsetzstelle (E) angeordneten Außenrings (29) eingreift und den Außenring (29) dadurch koaxial zu der Achse (A) ausrichtet, so dass dadurch, dass die Steuereinheit (85) dazu eingerichtet ist, den Stößelantrieb (46) anzusteuern, um den Rondenring (30) durch Beaufschlagung mit der Stößelfläche (47) zur Einsetzstelle (E) zu bewegen, der Rondenring (30) in den durch den Zentrierkörper (61) koaxial zur Achse (A) ausgerichteten Außenring (29) eingesetzt wird.

2. Einsetzvorrichtung nach Anspruch 1,
**dadurch gekennzeichnet, dass** die Steuereinheit (85) dazu eingerichtet ist, den Zentrierantrieb (62) und den Stößelantrieb (46) zeitlich derart koordiniert anzusteuern, dass der Zentrierkörper (61) in den Außenring (29) eingreift, bevor der Stößel (45) den Rondenring (30) mit dem Außenring (29) in Kontakt bringt.

3. Einsetzvorrichtung nach einem der vorhergehenden Ansprüche,
**dadurch gekennzeichnet, dass** die Steuereinheit (85) dazu eingerichtet ist, den Zentrierantrieb (62) und den Stößelantrieb (46) zeitlich derart koordiniert anzusteuern, dass der Zentrierkörper (61) während des Einsetzens des Rondenrings (30) in den Außenring (29) am Außenring (29) anliegt.

4. Einsetzvorrichtung nach Anspruch 1 oder 2,
**dadurch gekennzeichnet, dass** die Steuereinheit (85) dazu eingerichtet ist, den Zentrierantrieb (62) und den Stößelantrieb (46) zeitlich derart koordiniert anzusteuern, dass der Zentrierkörper (61) den Außenring (29) solange beaufschlagt, bis der durch den Stößel (45) bewegte Rondenring (30) den Zentrierkörper (61) vom Außenring (29) weg drückt.

5. Einsetzvorrichtung nach einem der vorhergehenden Ansprüche,
**dadurch gekennzeichnet, dass** der Zentrierkörper (61) an einem der Einsetzstelle (E) zugewandten freien Ende einen konischen Endabschnitt oder eine Fase (65) aufweist, so dass er sich in dem an das freie Ende anschließenden Endabschnitt zur Einsetzstelle (E) hin verjüngt und dass der konischen Endabschnitt oder die Fase (65) am Außenring (29) anliegt, wenn der Zentrierkörper (61) in das Loch des an der Einsetzstelle (E) angeordneten Außenrings (29) eingreift, um den Außenring (29) koaxial zu der Achse (A) auszurichten.

6. Einsetzvorrichtung nach einem der vorhergehenden Ansprüche,
**dadurch gekennzeichnet, dass** der Zentrierantrieb (62) einen pneumatischen Zylinder (70) mit einer ersten Arbeitskammer (72) und einer zweiten Arbeitskammer (73) aufweist, wobei die erste Arbeitskammer (72) zur Bewegung des Zentrierkörpers (61) zur Einsetzstelle (E) mit Druck beaufschlagt wird.

7. Einsetzvorrichtung nach Anspruch 6, dass die Steuereinheit (85) dazu eingerichtet ist, den Zentrierantrieb (62) derart anzusteuern, dass die erste Arbeitskammer (72) fluidisch mit der umgebenden Atmosphäre verbunden ist, bevor der Stößel (45) den Rondenring (30) mit dem Außenring (29) und/oder dem Zentrierkörper (61) in Kontakt bringt.

8. Einsetzvorrichtung nach Anspruch 6 oder 7,
**dadurch gekennzeichnet, dass** die zweite Arbeitskammer (73) zur Bewegung des Zentrierkörpers (61) von der Einsetzstelle (E) weg und/oder zum Halten des Zentrierkörpers (61) in einer von der Einsetzstelle (E) entfernten oberen Lage mit Druck beaufschlagt wird.

9. Einsetzvorrichtung nach einem der Ansprüche 6 bis 8,
**dadurch gekennzeichnet, dass** der Zentrierantrieb (62) zwei unabhängig voneinander ansteuerbare Ventile (75, 77) aufweist.

10. Einsetzvorrichtung nach einem der vorhergehenden Ansprüche,
**dadurch gekennzeichnet, dass** eine erste Transporteinrichtung (35) vorhanden ist, die dazu eingerichtet ist, die Rondenringe (30) in eine Ausgangsposition (P) benachbart zu der Stößelfläche (47) zu transportieren.

11. Einsetzvorrichtung nach einem der vorhergehenden Ansprüche,
**dadurch gekennzeichnet, dass** eine zweite Transporteinrichtung (36) vorhanden ist, die dazu eingerichtet ist, die Außenringe (29) zu der Einsetzstelle (E) zu transportieren.

12. Einsetzvorrichtung nach Anspruch 10 oder 11,
**dadurch gekennzeichnet, dass** die erste Transporteinrichtung (35) einen um eine erste Revolverachse (R1) antreibbaren ersten Revolverteller (35a) aufweist, der mehrere Aufnahmetaschen (35b) für jeweils einen Rondenring (30) aufweist und/oder dass die zweite Transporteinrichtung (36) einen um eine zweite Revolverachse (R2) antreibbaren zweiten Revolverteller (36a) aufweist, der mehrere Aufnahmetaschen (36b) für jeweils einen Außenring (29) oder eine Einheit aus Außenring (29) und eingesetztem Rondenring (30) aufweist.

13. Einsetzvorrichtung nach Anspruch 12,
**dadurch gekennzeichnet, dass** der Außenring (29) beim Einsetzen des Rondenrings (30) in der Aufnahmetasche (36b) des zweiten Revolvertellers (36a) bleibt.

14. Einsetzvorrichtung nach einem der vorhergehenden Ansprüche,
**dadurch gekennzeichnet, dass** der Stößelantrieb (46) als elektromotorischer Antrieb ausgeführt ist.

15. Einsetzvorrichtung nach einem der vorhergehenden Ansprüche,
**dadurch gekennzeichnet, dass** koaxial zu der Achse (A) zwischen dem sich in einer zurückgezogenen Position befindenden Stößel (45) und der Einsetzstelle (E) ein Zentrierkanal (54) vorhanden ist.

16. Verfahren zum Einsetzen eines Rondenrings (30) in einen Außenring (29) einer Ronde, mit folgenden Schritten:
- Transportieren eines Außenrings (29) an eine Einsetzstelle (E),
- Transportieren eines Rondenrings (30) in eine Ausgangsposition (P) in Axialrichtung, parallel zu einer Achse (A), benachbart zu dem Außenring (29),
- Ausrichten des Außenrings (29) koaxial zur Achse (A),
- Bewegen des Rondenrings (30) in Axialrichtung bis in den Außenring (29) an der Einsetzstelle (E),
**dadurch gekennzeichnet, dass** die Einsetzvorrichtung (34) nach einem der Ansprüche 1 bis 15 zur Durchführung des Verfahrens verwendet wird.

17. Verfahren nach Anspruch 16,
**dadurch gekennzeichnet, dass** der Rondenring (30) während seiner Bewegung in Axialrichtung zur Einsetzstelle (E) koaxial zur Achse (A) ausgerichtet wird.

## Claims

1. Inserting device (34) for inserting a circular blank ring (30) into an outer ring (29) of a circular blank,
with a tappet (45) arranged coaxially to an axis (A) and having a tappet face (47) for impacting the circular blank ring (30),
with a tappet drive (46) for moving the tappet (45) along the axis (A),
with a control unit (85) which is configured to actuate the tappet drive (46) so as to move the circular blank ring (30) towards the insertion point (E) by impacting with the tappet face (47),
**characterised in that** a centring body (61) is provided which is arranged coaxially to the axis (A) and has a free end assigned to the tappet face (47),
that a centring drive (62) is provided for moving the centring body (61) along the axis (A),
that the control unit (85) is configured to actuate the centring drive (62) so that the centring body (61) engages in a hole of an outer ring (29) arranged at the insertion point (E) and thereby aligns the outer ring (29) coaxially to the axis (A) so that, because the control unit (85) is configured to actuate the tappet drive (46) to move the circular blank ring (30) towards the insertion point (E) by impacting with the tappet face (47), the circular blank ring (30) is inserted into the outer ring (29) which is aligned coaxially to the axis (A) by the centring body (61).

2. Inserting device according to claim 1, **characterised in that** the control unit (85) is configured to actuate the centring drive (62) and the tappet drive (46) in a temporally coordinated fashion such that the centring body (61) engages in the outer ring (29) before the tappet (45) brings the circular blank ring (30) into contact with the outer ring (29).

3. Inserting device according to any of the preceding claims, **characterised in that** the control unit (85) is configured to actuate the centring drive (62) and the tappet drive (46) in a temporally coordinated fashion such that the centring body (61) lies on the outer ring (29) during insertion of the circular blank ring (30) into the outer ring (29).

4. Inserting device according to claim 1 or 2, **characterised in that** the control unit (85) is configured to actuate the centring drive (62) and the tappet drive (46) in a temporally coordinated fashion such that the centring body (61) impacts the outer ring (29) until the circular blank ring (30) moved by the tappet (45) presses the centring body (61) away from the outer ring (29).

5. Inserting device according to any of the preceding claims, **characterised in that** the centring body (61) has a conical end portion or a chamfer (65) at a free end facing the insertion point (E), so that it tapers towards the insertion point (E) in the end portion adjoining the free end, and that the conical end portion or the chamfer (65) lies on the outer ring (29) when the centring body (61) engages in the hole of the outer ring (29) arranged at the insertion point (E), in order to align the outer ring (29) coaxially to the axis (A).

6. Inserting device according to any of the preceding claims, **characterised in that** the centring drive (62) has a pneumatic cylinder (70) with a first working chamber (72) and a second working chamber (73), wherein the first working chamber (72) is pressurised to move the centring body (61) towards the insertion point (E).

7. Inserting device according to claim 6, **characterised in that** the control unit (85) is configured to actuate the centring drive (62) such that the first working chamber (72) is fluidically connected to the surrounding atmosphere before the tappet (45) brings the circular blank ring (30) into contact with the outer ring (29) and/or the centring body (61).

8. Inserting device according to claim 6 or 7, **characterised in that** the second working chamber (73) is pressurised to move the centring body (61) away from the insertion point (E) and/or to hold the centring body (61) in an upper position remote from the insertion point (E).

9. Inserting device according to one of claims 6 to 8, **characterised in that** the centring drive (62) has two valves (75, 77) which can be actuated independently of each other.

10. Inserting device according to any of the preceding claims, **characterised in that** a first transport device (35) is present which is configured to transport the circular blank rings (30) into a starting position (P) adjacent to the tappet face (47).

11. Inserting device according to any of the preceding claims, **characterised in that** a second transport device (36) is provided which is configured to transport the outer rings (29) to the insertion point (E).

12. Inserting device according to claim 10 or 11, **characterised in that** the first transport device (35) has a first revolver plate (35a) which can be driven about a first revolver axis (R1) and has several receiving pockets (35b) each for a circular blank ring (30), and/or that the second transport device (36) has a second revolver plate (36a) which can be driven about a second revolver axis (R2) and has several receiving pockets (36b) each for an outer ring (29) or a unit composed of outer ring (29) and inserted circular blank ring (30).

13. Inserting device according to claim 12, **characterised in that** on insertion of the circular blank ring (30), the outer ring (29) remains in the receiving pocket (36b) of the second revolver plate (36a).

14. Inserting device according to any of the preceding claims, **characterised in that** the tappet drive (46) is configured as an electric motor drive.

15. Inserting device according to any of the preceding claims, **characterised in that** a centring channel (54) is provided coaxially to the axis (A) between the tappet (45) in a retracted position and the insertion point (E).

16. Method for inserting a circular blank ring (30) in an outer ring (29) of a circular blank, with the following steps:
- transporting an outer ring (29) to an insertion point (E),
- transporting a circular blank ring (30) to a starting position (P), adjacent to the outer ring (29), in the axial direction parallel to an axis (A),
- aligning the outer ring (29) coaxially to the axis (A),
- moving the circular blank ring (30) in the axial direction into the outer ring (29) at the insertion point (E),
**characterised in that** the inserting device (34) as claimed in any of claims 1 to 15 is used to perform the method.

17. Method according to claim 16, **characterised in that** the circular blank ring (30) is aligned coaxially to the axis (A) during its movement in the axial direction towards the insertion point (E).

## Revendications

1. Dispositif d'insertion (34) pour insérer une ébauche annulaire (30) dans une bague extérieure (29) d'une ébauche ronde,
comprenant un coulisseau (45) qui est disposé de façon coaxiale avec un axe (A) et présente une face de coulisseau (47) destinée à agir sur l'ébauche annulaire (30),
comprenant un moyen d'entraînement de coulisseau (46) destiné à déplacer le coulisseau (45) le long de l'axe (A),
comprenant une unité de commande (85) qui est conçue pour activer le moyen d'entraînement de coulisseau (46) aux fins de déplacer l'ébauche annulaire (30) jusqu'à l'emplacement d'insertion (E), sous l'action de la face de coulisseau (47),
**caractérisé en ce qu'**il est prévu un corps de centrage (61) qui est disposé de façon coaxiale avec l'axe (A) et présente une extrémité libre qui est associée à la face de coulisseau (47),
**en ce qu'**il est prévu un moyen d'entraînement de centrage (62) destiné à déplacer le corps de centrage (61) le long de l'axe (A),
**en ce que** l'unité de commande (85) est conçue pour activer le moyen d'entraînement de centrage (62) de manière à ce que le corps de centrage (61) pénètre dans un trou d'une bague extérieure (29) disposée à l'emplacement d'insertion (E) et aligne ainsi la bague extérieure (29) coaxialement avec l'axe (A), de sorte que, l'unité de commande (85) étant conçue pour activer le moyen d'entraînement de coulisseau (46) aux fins de déplacer l'ébauche annulaire (30) jusqu'à l'emplacement d'insertion (E), sous l'action de la face de coulisseau (47), l'ébauche annulaire (30) est insérée dans la bague extérieure (29) alignée coaxialement avec l'axe (A) par le corps de centrage (61).

2. Dispositif d'insertion selon la revendication 1, **caractérisé en ce que** l'unité de commande (85) est conçue pour activer le moyen d'entraînement de centrage (62) et le moyen d'entraînement de coulisseau (46), de façon coordonnée dans le temps, de telle sorte que le corps de centrage (61) s'engage dans la bague extérieure (29) avant que le coulisseau (45) ne mette l'ébauche annulaire (30) en contact avec la bague extérieure (29).

3. Dispositif d'insertion selon l'une des revendications précédentes, **caractérisé en ce que** l'unité de commande (85) est conçue pour activer le moyen d'entraînement de centrage (62) et le moyen d'entraînement de coulisseau (46), de façon coordonnée dans le temps, de telle sorte que le corps de centrage (61) soit appliqué contre la bague extérieure (29) pendant l'insertion de l'ébauche annulaire (30) dans la bague extérieure (29).

4. Dispositif d'insertion selon la revendication 1 ou 2, **caractérisé en ce que** l'unité de commande (85) est conçue pour activer le moyen d'entraînement de centrage (62) et le moyen d'entraînement de coulisseau (46), de façon coordonnée dans le temps, de telle sorte que le corps de centrage (61) agisse sur la bague extérieure (29) jusqu'à ce que l'ébauche annulaire (30), qui est déplacée par le coulisseau (45), repousse le corps de centrage (61) de la bague extérieure (29).

5. Dispositif d'insertion selon l'une des revendications précédentes, **caractérisé en ce que** le corps de centrage (61) présente, à une extrémité libre tournée vers l'emplacement d'insertion (E), une partie d'extrémité conique ou un chanfrein (65), de sorte que dans la partie d'extrémité qui se raccorde à l'extrémité libre, il se rétrécit en direction de l'emplacement d'insertion (E), et **en ce que** la partie d'extrémité conique ou le chanfrein (65) est appliqué(e) contre la bague extérieure (29) lorsque le corps de centrage (61) s'engage dans le trou de la bague extérieure (29) disposée à l'emplacement d'insertion (E), pour aligner la bague extérieure (29) coaxialement avec l'axe (A).

6. Dispositif d'insertion selon l'une des revendications précédentes, **caractérisé en ce que** le moyen d'entraînement de centrage (62) présente un vérin pneumatique (70) comportant une première chambre de travail (72) et une deuxième chambre de travail (73), une pression étant appliquée à la première chambre de travail (72) pour déplacer le corps de centrage (61) vers l'emplacement d'insertion (E).

7. Dispositif d'insertion selon la revendication 6, **caractérisé en ce que** l'unité de commande (85) est conçue pour activer le moyen d'entraînement de centrage (62) de telle manière que la première chambre de travail (72) soit reliée sur le plan fluidique à l'atmosphère environnante, avant que le coulisseau (45) ne mette l'ébauche annulaire (30) en contact avec la bague extérieure (29) et/ou le corps de centrage (61).

8. Dispositif d'insertion selon la revendication 6 ou 7, **caractérisé en ce qu'**une pression est appliquée à la deuxième chambre de travail (73) aux fins de déplacer le corps de centrage (61) en l'éloignant de l'emplacement d'insertion (E) et/ou aux fins de maintenir le corps de centrage (61) dans une position haute éloignée de l'emplacement d'insertion (E).

9. Dispositif d'insertion selon l'une des revendications 6 à 8, **caractérisé en ce que** le moyen d'entraînement de centrage (62) présente deux valves (75, 77) pouvant être commandées indépendamment l'une de l'autre.

10. Dispositif d'insertion selon l'une des revendications précédentes, **caractérisé en ce qu'**il est prévu un premier dispositif de transport (35) qui est conçu pour transporter les ébauches annulaires (30) dans une position de départ (P) située à proximité de la face de coulisseau (47).

11. Dispositif d'insertion selon l'une des revendications précédentes, **caractérisé en ce qu'**il est prévu un deuxième dispositif de transport (36) qui est conçu pour transporter les bagues extérieures (29) jusqu'à l'emplacement d'insertion (E).

12. Dispositif d'insertion selon la revendication 10 ou 11, **caractérisé en ce que** le premier dispositif de transport (35) présente un premier plateau revolver (35a) qui peut être entraîné autour d'un premier axe revolver (R1) et qui présente plusieurs logements de réception (35b) destinés respectivement à une ébauche annulaire (30), et/ou **en ce que** le deuxième dispositif de transport (36) présente un deuxième plateau revolver (36a) qui peut être entraîné autour d'un deuxième axe revolver (R2) et qui présente plusieurs logements de réception (36b) destinés respectivement à une bague extérieure (29) ou une unité formée d'une bague extérieure (29) et d'une ébauche annulaire (30) insérée.

13. Dispositif d'insertion selon la revendication 12, **caractérisé en ce que** lors de l'insertion de l'ébauche annulaire (30), la bague extérieure (29) reste dans le logement de réception (36b) du deuxième plateau revolver (36a).

14. Dispositif d'insertion selon l'une des revendications précédentes, **caractérisé en ce que** le moyen d'entraînement de coulisseau (46) est réalisé sous forme de moyen d'entraînement à moteur électrique.

15. Dispositif d'insertion selon l'une des revendications précédentes, **caractérisé en ce qu'**un canal de centrage (54) est prévu coaxialement à l'axe (A), entre le coulisseau (45), qui se trouve dans une position en retrait, et l'emplacement d'insertion (E).

16. Procédé d'insertion d'une ébauche annulaire (30) dans une bague extérieure (29) d'une ébauche ronde, comprenant les étapes suivantes :
- transport d'une bague extérieure (29) jusqu'à un emplacement d'insertion (E),
- transport d'une ébauche annulaire (30) jusqu'à une position de départ (P), dans le sens axial, parallèlement à un axe (A), à proximité de la bague extérieure (29),
- alignement de la bague extérieure (29), coaxialement avec l'axe (A),
- déplacement de l'ébauche annulaire (30) dans le sens axial, jusque dans la bague extérieure (29), à l'emplacement d'insertion (E),
**caractérisé en ce que** l'on utilise le dispositif d'insertion (34) selon l'une des revendications 1 à 15 pour mettre en œuvre le procédé.

17. Procédé selon la revendication 16, **caractérisé en ce que** pendant son déplacement dans le sens axial, en direction de l'emplacement d'insertion (E), l'ébauche annulaire (30) est alignée coaxialement avec l'axe (A).
